# EUROPEAN PATENT SPECIFICATION

(11) **EP 3 810 901 B1**
(45) Date of publication and mention of the grant of the patent: **08.06.2022**
(21) Application number: 18737164.6
(22) Date of filing: 20.06.2018
(51) Int. Cl.: F01D 5/14, F02C 6/12, F01D 17/16, F01D 5/08, F01D 11/10, F01D 11/14, F01D 11/24

(54) **TURBOCHARGER AND METHOD OF OPERATING TURBOCHARGER**
TURBOLADER UND VERFAHREN ZUM BETRIEB EINES TURBOLADERS
TURBOCOMPRESSEUR ET SON PROCÉDÉ DE FONCTIONNEMENT

(43) Date of publication of application: 28.04.2021
(73) Proprietor: Wärtsilä Finland Oy, 65170 Vaasa (FI)
(72) Inventor: MÄKI, Kristian, 65100 Vaasa (FI); NORDMAN, Tom, 65100 Vaasa (FI)
(74) Representative: Berggren Oy
(86) International application number: PCT/EP2018/066446
(87) International publication number: WO 2019/242854

(56) References cited:
- EP-A1- 2 083 149
- EP-A1- 2 730 744
- WO-A2-2006/134222
- FR-A- 919 016
- JP-A- H11 117 753

## Description

### Technical field of the invention

The present invention relates to a turbocharger in accordance with claim 1. The invention also concerns a method of operating a turbocharger as defined in the other independent claim.

### Background of the invention

Practically all large piston engines, such as ship or power plant engines, are provided with at least one turbocharger. By means of turbochargers, part of the energy contained in the hot exhaust gas can be utilized. A turbocharger can have a significant effect on the efficiency of the engine. Optimal design of a turbocharger is therefore important to achieve high efficiency of the engine. For instance, the clearances between the housing of a turbocharger and the turbine and compressor wheels should be small to effectively transform the energy of the exhaust gas into rotation of the shaft of the turbocharger and for effectively pressurizing the air introduced into the compressor.

The rotation speeds of turbochargers are high, and the turbines also experience high temperatures due to the exhaust gas flow through the turbines. Together with the demand for high efficiency, this sets challenges for the designing and manufacturing of turbochargers. One problematic point of a turbocharger design is the clearance between the vanes of the turbine wheel and a turbine shroud around the turbine wheel. The exhaust gases contain contaminants, which can lead to fouling of the gap. This can cause wear of the vanes of the turbine wheel.

An example of a turbocompressor comprising a compressor unit and a turbine unit is described in WO 2006/134222 A2. According to the disclosure, the turbine unit comprises means for injecting carbon build-up preventing substance into the flow channel of the turbine part of the turbocompressor.

### Summary of the invention

An object of the present invention is to provide an improved turbocharger for an internal combustion engine. The characterizing features of the turbocharger according to the invention are given in claim 1. Another object of the invention is to provide an improved method of operating a turbocharger. The characterizing features of the method are given in the other independent claim.

The turbocharger according to the invention comprises a compressor for pressurizing intake air of an internal combustion engine, the compressor comprising a rotatable compressor wheel; a turbine for driving the compressor, the turbine comprising a turbine wheel and a turbine shroud surrounding the turbine wheel, the turbine wheel comprising a plurality of vanes and being rotatable by exhaust gas flow of an internal combustion engine; and a shaft connecting the compressor wheel to the turbine wheel. The turbocharger further comprises an air duct and a plurality of air outlets for introducing pressurized air from the compressor into a gap between the turbine shroud and the vanes of the turbine wheel. The air duct is arranged partly inside the shaft of the turbocharger and at least some of the air outlets are arranged in the vanes of the turbine wheel.

In the method according to the invention, pressurized air from the compressor is introduced into a gap between the turbine shroud and the vanes of the turbine wheel. Further, in the method according to the invention, pressurized air is introduced into the gap via the shaft of the turbocharger and via the vanes of the turbine wheel.

With the turbocharger and the method according to the invention, fouling of the gap between the turbine and the turbine shroud is reduced. Fouling can cause wear of the turbine shroud and turbine vanes. Reduced fouling allows smaller tolerances and better efficiency of the turbocharger. Arranging the air duct partly inside the shaft of the turbocharger allows a short path from the compressor to the turbine. By introducing the air into the gap via the vanes of the turbine wheel, centrifugal force increases the speed of the air flow. In addition, the air flow cools down the turbine vanes.

According to an embodiment of the invention, the shaft is provided with a drilling behind the compressor wheel for introducing air into the air duct.

According to an embodiment of the invention, each vane of the turbine wheel is provided with an air outlet. This ensures uniform air flow in the gap between the turbine shroud and the turbine wheel.

According to an embodiment of the invention, all the air outlets are arranged in the vanes of the turbine wheel.

According to an embodiment of the invention, at least some of the air outlets are arranged in the turbine shroud.

According to an embodiment of the invention, the air outlets are configured to direct the air into the gap at an angle that is 15-75 degrees in relation to the axial direction of the shaft from the turbine towards the compressor. The air flow is thus not against the exhaust gas flow. A flow against the exhaust gas flow could reduce efficiency of the turbocharger.

According to an embodiment of the invention, the air is introduced into the air duct through a gap behind the compressor wheel. By adjusting the width of the gap behind the compressor wheel, the amount of air flowing from the compressor to the turbine can be adjusted.

### Brief description of the drawings

Embodiments of the invention are described below in more detail with reference to the accompanying drawings, in which
Fig. 1 shows a simplified cross-sectional view of a turbocharger according to an embodiment of the invention,
Fig. 2 shows a simplified cross-sectional view of a turbocharger according to another embodiment of the invention,
Fig. 3 shows an enlarged view of detail D of figure 1, and
Fig. 4 shows an enlarged view of detail E of figure 2.

### Description of embodiments of the invention

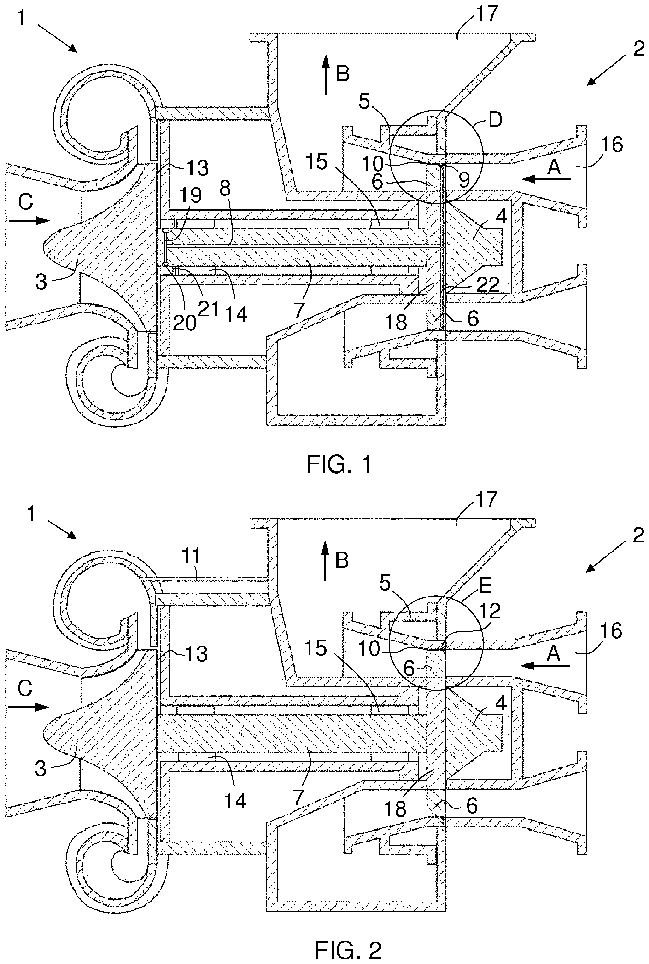

Figure 1 shows a simplified cross-sectional view of a turbocharger of an internal combustion engine according to an embodiment of the invention. The turbocharger can be used as part of an exhaust system of a large piston engine, such as a main or an auxiliary engine of a ship or an engine that is used at a power plant for producing electricity.

The turbocharger comprises a compressor 1 and a turbine 2. The compressor 1 is configured to increase the pressure of the intake air of the engine. The air introduced into the compressor 1 can be at ambient pressure, if the turbocharger is the sole turbocharger of an engine or a low-pressure turbocharger of a two-stage turbocharged engine. If the turbocharger is a high-pressure turbocharger of a two-stage turbocharged engine, the pressure of the intake air can be higher than the ambient pressure even before the compressor 1.

The turbine 2 is configured to drive the compressor 1 by converting energy of the exhaust gas of the engine into rotational energy. The turbine 2 comprises a rotatable turbine wheel 4 and the compressor comprises a rotatable compressor wheel 3. The compressor wheel 3 is connected to the turbine wheel 4 by means of a shaft 7. The compressor wheel 3 and the turbine wheel 4 are connected to the shaft 7 in a rotationally fixed manner. The compressor wheel 3, turbine wheel 4 and shaft 7 thus rotate with the same rotation speed. The shaft 7 is supported by bearings 14, 15.

The turbine 2 comprises an inlet 16. Exhaust gas is introduced into the turbine 1 via the inlet 16 in the axial direction of the shaft 7, as denoted by arrow A. The exhaust gas exits the turbine 2 via an outlet 17 in a radial direction of the shaft 7, as denoted by arrow B. The turbine 2 has a high-pressure side and a low-pressure side. The upstream side of the turbine wheel 4 is the high-pressure side and the downstream side of the turbine wheel 4 is the low-pressure side. Intake air is introduced into the compressor 1 in the axial direction of the shaft 7 from an opposite direction in relation to the exhaust gas, as denoted by arrow C. The compressor 1 has a low-pressure side and a high-pressure side. The upstream side of the compressor wheel 3 is the low-pressure side and the downstream side of the compressor wheel is the high-pressure side.

The turbine wheel 4 comprises a plurality of vanes 6, which can also be called as blades. The vanes 6 protrude radially outwards from a body 18 of the turbine wheel 4. The vanes 6 are distributed evenly along the perimeter of the body 18. The turbine wheel 4 is surrounded by a turbine shroud 5. The turbine shroud 5 is a housing extending in circumferential direction over the whole outer perimeter of the turbine wheel 4. There is an annular gap 10 between the turbine wheel 4 and the turbine shroud 5. The size of the gap 10 affects how the energy of exhaust gas can be converted into rotational energy of the turbine wheel 4, compressor wheel 3 and shaft 7. If the gap 10 is large, greater part of exhaust gas can flow through the gap 10 from the high-pressure side of the turbine 2 to the low-pressure side and more energy of exhaust gas is wasted. On the other hand, if the gap 10 is too small, fouling of the turbine shroud 5 and the tips of the turbine vanes 6 can cause scraping and wear of the turbine shroud 5 and the turbine vanes 6.

In a turbocharger according to the invention, pressurized air from the compressor 1 is introduced into the gap 10 between the turbine wheel 4 and the turbine shroud 5. Pressurized air refers here to air on the downstream side of the compressor wheel 3. The air helps reducing fouling of the gap 10. In the embodiment of figure 1, the air is introduced into the gap 10 via the vanes 6 of the turbine wheel 4. The shaft 7 of the turbocharger is provided with an air duct 8. The air duct 8 is an axial duct that is coaxial with the rotation axis of the shaft 7. The shaft 7 is provided with a circumferential groove 20. The groove 20 is arranged close to the compressor wheel 3. The groove 20 is on the compressor wheel side of the compressor-side bearing 14 of the turbocharger. One or more drillings 19 extend radially from the groove 20 to the air duct 8 for introducing pressurized air into the air duct 8. Behind the compressor wheel 3 in the axial direction of the turbocharger there is a gap 13. Via the gap 13, pressurized air can be introduced into the groove 20 of the shaft 7. A sealing 21 is arranged around the shaft 7 between the groove 20 and the compressor-side bearing 14. The sealing 21 prevents pressurized air from escaping to the other side of the bearing 14.

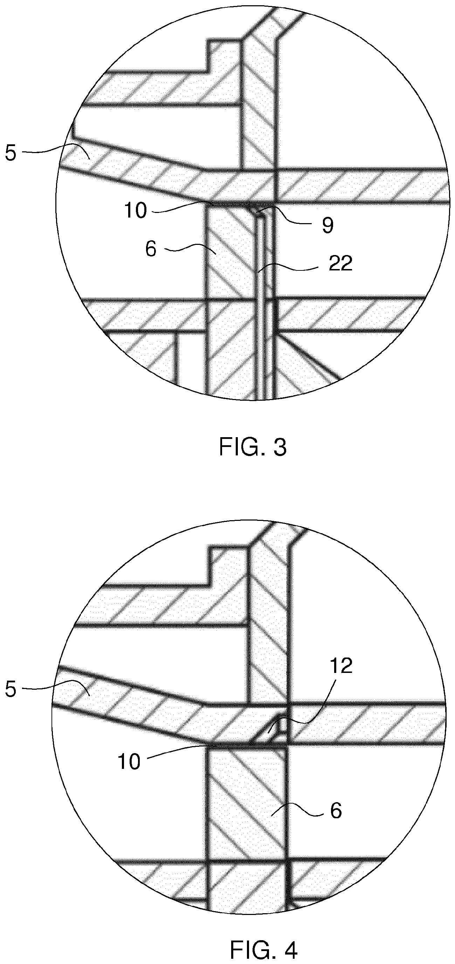

At least some of the vanes 6 of the turbine wheel 4 are provided with air outlets 9, through which the pressurized air is introduced into the gap 10. One of the air outlets 9 can be seen in the enlarged view of figure 3. The air outlets 9 should be distributed evenly along the perimeter of the turbine wheel 4. All the vanes 6 can be provided with air outlets 9, which ensures uniform air flow to the gap 10. The turbine wheel 4 is provided with one or more air channels 22 for supplying air from the air duct 8 of the shaft 7 to the air outlets 9.

The air outlets 9 are configured to direct the air flow from the air outlets so that the angle between the axial direction of the turbocharger from the turbine 2 to the compressor 1 and the direction of the air flow is in the range of 15-75 degrees. The air flow is thus directed from a radial plane of the turbine wheel 4 towards the compressor 1. This ensures that the air flow does not act against the exhaust gas flow and reduce efficiency of the turbocharger.

A benefit of introducing the pressurized air into the gap 10 via the vanes 6 of the turbine wheel 4 is that centrifugal force increases the flow velocity of the air. In addition, the air cools down the vanes 6 of the turbine wheel 4.

The embodiment of figure 2 is similar to the embodiment of figure 1. However, the pressurized air is introduced into the gap 10 between the turbine wheel 4 and the turbine shroud 5 via the turbine shroud 5 instead of the vanes 6 of the turbine wheel 4. Instead of an air duct inside the shaft 7, the turbocharger is provided with an air duct 11 connecting the high-pressure side of the compressor 1 to the turbine shroud 5. The air duct 11 can comprise a pipe that is outside the housing of the turbocharger. The turbine shroud 5 is provided with a plurality of air outlets 12, through which the pressurized air is introduced into the gap 10 between the turbine wheel 4 and the turbine shroud 5. One of the air outlets 12 can be seen in the enlarged view of figure 4. The turbine shroud 5 could be provided for example with a circumferential groove for distributing the air to the air outlets 12.

In the embodiment of figure 2, the air outlets 12 are configured in a similar way as in the embodiment of figure 1 to direct the air flow towards the compressor 1. The angle between the flow direction of pressurized air and the axial direction of the shaft 7 can thus be in the range of 15-75 degrees.

In the embodiment of figure 2, the rotational movement of the turbine wheel 4 is not utilized for increasing the velocity of the air flow. On the other hand, the construction of figure 2 is easier to implement.

The embodiments of figures 1 and 2 could also be combined. The turbocharger could thus be provided with air outlets 9, 12 in both the vanes 6 of the turbine wheel 4 and in the turbine shroud 5. Part of the pressurized air could be introduced into the gap 10 between turbine shroud 5 and the vanes 6 of the turbine wheel through the shaft 7 and part of the air could be introduced via another route.

It will be appreciated by a person skilled in the art that the invention is not limited to the embodiments described above, but may vary within the scope of the appended claims.

## Claims

1. A turbocharger for an internal combustion engine, the turbocharger comprising
- a compressor (1) for pressurizing intake air of an internal combustion engine, the compressor (1) comprising a rotatable compressor wheel (3),
- a turbine (2) for driving the compressor (1), the turbine (2) comprising a turbine wheel (4) and a turbine shroud (5) surrounding the turbine wheel (4), the turbine wheel (4) comprising a plurality of vanes (6) and being rotatable by exhaust gas flow of an internal combustion engine, and
- a shaft (7) connecting the compressor wheel (3) to the turbine wheel (4),
wherein the turbocharger comprises an air duct (8) and a plurality of air outlets (9, 12) for introducing pressurized air from the compressor (1) into a gap (10) between the turbine shroud (5) and the vanes (6) of the turbine wheel (4), **characterized in that** the air duct (8) is arranged partly inside the shaft (7) of the turbocharger and at least some of the air outlets (9) are arranged in the vanes (6) of the turbine wheel (4).

2. A turbocharger according to claim 1, wherein the shaft (7) is provided with a drilling (19) behind the compressor wheel (3) for introducing air into the air duct (8).

3. A turbocharger according to claim 1 or 2, wherein each vane (6) of the turbine wheel (4) is provided with an air outlet (9).

4. A turbocharger according to any of claims 1-3, wherein all the air outlets (9) are arranged in the vanes (6) of the turbine wheel (4).

5. A turbocharger according to any of claims 1-3, wherein at least some of the air outlets (12) are arranged in the turbine shroud (5).

6. A turbocharger according to any of the preceding claims, wherein the air outlets (9, 12) are configured to direct the air into the gap (10) at an angle that is 15-75 degrees in relation to the axial direction of the shaft (7) from the turbine (2) towards the compressor (1).

7. A turbocharger according to any of the preceding claims, wherein the air is introduced into the air duct (8) through a gap (13) behind the compressor wheel (3).

8. A method of operating a turbocharger of an internal combustion engine, the turbocharger comprising
- a compressor (1) for pressurizing intake air of an internal combustion engine, the compressor (1) comprising a rotatable compressor wheel (3),
- a turbine (2) for driving the compressor (1), the turbine (2) comprising a turbine wheel (4) and a turbine shroud (5) surrounding the turbine wheel (4), the turbine wheel (4) comprising a plurality of vanes (6) and being rotatable by exhaust gas flow of an internal combustion engine, and
- a shaft (7) connecting the compressor wheel (3) to the turbine wheel (4),
wherein the method comprises a step of introducing pressurized air from the compressor (1) into a gap (10) between the turbine shroud (5) and the vanes (6) of the turbine wheel (4), **characterized in that** pressurized air is introduced into the gap (10) via the shaft (7) of the turbocharger and via the vanes (6) of the turbine wheel (4).

9. A method according to claim 8, wherein all the pressurized air is introduced into the gap (10) via the vanes (6) of the turbine wheel (4).

10. A method according to claim 8, wherein pressurized air is introduced into the gap (10) via the turbine shroud (5).

## Patentansprüche

1. Turbolader für einen Verbrennungsmotor, wobei der Turbolader Folgendes umfasst
- einen Verdichter (1) zum Verdichten von Ansaugluft eines Verbrennungsmotors, wobei der Verdichter (1) ein drehbares Verdichterrad (3) umfasst,
- eine Turbine (2) zum Antrieb des Verdichters (1), wobei die Turbine (2) ein Turbinenrad (4) und ein das Turbinenrad (4) umgebendes Turbinendeckband (5) umfasst, wobei das Turbinenrad (4) eine Vielzahl von Leitschaufeln (6) umfasst und durch eine Abgasströmung eines Verbrennungsmotors drehbar ist, und
- eine Welle (7), die das Verdichterrad (3) mit dem Turbinenrad (4) verbindet, wobei der Turbolader einen Luftkanal (8) und eine Vielzahl von Luftauslässen (9, 12) zum Einführen von Druckluft aus dem Verdichter ( 1) in einen Spalt (10) zwischen dem Turbinendeckband (5) und den Leitschaufeln (6) des Turbinenrades (4) umfasst, **dadurch gekennzeichnet, dass** der Luftkanal (8) teilweise innerhalb der Welle (7) des Turboladers angeordnet ist und zumindest einige der Luftauslässe (9) in den Leitschaufeln (6) des Turbinenrads (4) angeordnet sind.

2. Turbolader nach Anspruch 1, **dadurch gekennzeichnet, dass** die Welle (7) hinter dem Verdichterrad (3) mit einer Bohrung (19) zum Einleiten von Luft in den Luftkanal (8) versehen ist.

3. Turbolader nach Anspruch 1 oder 2, wobei jede Leitschaufel (6) des Turbinenrads (4) mit einem Luftauslass (9) versehen ist.

4. Turbolader nach einem der Ansprüche 1 bis 3, wobei alle Luftauslässe (9) in den Leitschaufeln (6) des Turbinenrads (4) angeordnet sind.

5. Turbolader nach einem der Ansprüche 1 bis 3, wobei zumindest einige der Luftauslässe (12) in dem Turbinendeckband (5) angeordnet sind.

6. Turbolader nach einem der vorhergehenden Ansprüche, wobei die Luftauslässe (9, 12) konfiguriert sind, um die Luft in den Spalt (10) in einem Winkel von 15-75 Grad in Bezug auf die axiale Richtung der Welle (7) von der Turbine (2) zum Verdichter (1) zu leiten.

7. Turbolader nach einem der vorhergehenden Ansprüche, wobei die Luft in den Luftkanal (8) durch einen Spalt (13) hinter dem Verdichterrad (3) eingeführt wird.

8. Verfahren zum Betreiben eines Turboladers eines Verbrennungsmotors, wobei der Turbolader Folgendes umfasst
- einen Verdichter (1) zum Verdichten von Ansaugluft eines Verbrennungsmotors, wobei der Verdichter (1) ein drehbares Verdichterrad (3) umfasst,
- eine Turbine (2) zum Antrieb des Verdichters (1), wobei die Turbine (2) ein Turbinenrad (4) und ein das Turbinenrad (4) umgebendes Turbinendeckband (5) umfasst, wobei das Turbinenrad (4) eine Vielzahl von Leitschaufeln (6) umfasst und durch eine Abgasströmung eines Verbrennungsmotors drehbar ist, und
- eine Welle (7), die das Verdichterrad (3) mit dem Turbinenrad (4) verbindet, wobei das Verfahren einen Schritt des Einführens von Druckluft von dem Verdichter (1) in einen Spalt (10) zwischen dem Turbinenmantel (5) und den Leitschaufeln (6) des Turbinenrads (4) umfasst, **dadurch gekennzeichnet, dass** Druckluft über die Welle (7) des Turboladers und über die Leitschaufeln (6) des Turbinenrads (4) in den Spalt (10) eingeleitet wird.

9. Verfahren nach Anspruch 8, **dadurch gekennzeichnet, dass** die gesamte Druckluft über die Leitschaufeln (6) des Turbinenrades (4) in den Spalt (10) eingeleitet wird.

10. Verfahren nach Anspruch 8, wobei Druckluft über das Turbinendeckband (5) in den Spalt (10) eingeleitet wird.

## Revendications

1. Turbocompresseur pour un moteur à combustion interne, le turbocompresseur comprenant
- un compresseur (1) pour mettre sous pression de l'air d'admission d'un moteur à combustion interne, le compresseur (1) comprenant une roue de compresseur (3) rotative,
- une turbine (2) pour entraîner le compresseur (1), la turbine (2) comprenant une roue de turbine (4) et un carénage de turbine (5) entourant la roue de turbine (4), la roue de turbine (4) comprenant une pluralité d'aubes (6) et pouvant tourner par un écoulement de gaz d'échappement d'un moteur à combustion interne, et
- un arbre (7) reliant la roue de compresseur (3) à la roue de turbine (4),
dans lequel le turbocompresseur comprend un conduit d'air (8) et une pluralité de sorties d'air (9, 12) pour introduire de l'air sous pression depuis le compresseur (1) dans un interstice (10) entre le carénage de turbine (5) et les aubes (6) de la roue de turbine (4), **caractérisé en ce que** le conduit d'air (8) est agencé en partie à l'intérieur de l'arbre (7) du turbocompresseur et au moins certaines des sorties d'air (9) sont agencées dans les aubes (6) de la roue de turbine (4).

2. Turbocompresseur selon la revendication 1, dans lequel l'arbre (7) est pourvu d'un perçage (19) derrière la roue de compresseur (3) pour introduire de l'air dans le conduit d'air (8).

3. Turbocompresseur selon la revendication 1 ou 2, dans lequel chaque aube (6) de la roue de turbine (4) est pourvue d'une sortie d'air (9).

4. Turbocompresseur selon l'une quelconque des revendications 1 à 3, dans lequel toutes les sorties d'air (9) sont agencées dans les aubes (6) de la roue de turbine (4).

5. Turbocompresseur selon l'une quelconque des revendications 1 à 3, dans lequel au moins certaines des sorties d'air (12) sont agencées dans le carénage de turbine (5).

6. Turbocompresseur selon l'une quelconque des revendications précédentes, dans lequel les sorties d'air (9, 12) sont configurées pour diriger l'air dans l'interstice (10) selon un angle qui est de 15 à 75 degrés par rapport à la direction axiale de l'arbre (7) depuis la turbine (2) vers le compresseur (1).

7. Turbocompresseur selon l'une quelconque des revendications précédentes, dans lequel l'air est introduit dans le conduit d'air (8) à travers un interstice (13) derrière la roue de compresseur (3).

8. Procédé de fonctionnement d'un turbocompresseur d'un moteur à combustion interne, le turbocompresseur comprenant
- un compresseur (1) pour mettre sous pression de l'air d'admission d'un moteur à combustion interne, le compresseur (1) comprenant une roue de compresseur (3) rotative,
- une turbine (2) pour entraîner le compresseur (1), la turbine (2) comprenant une roue de turbine (4) et un carénage de turbine (5) entourant la roue de turbine (4), la roue de turbine (4) comprenant une pluralité d'aubes (6) et pouvant tourner par un écoulement de gaz d'échappement d'un moteur à combustion interne, et
- un arbre (7) reliant la roue de compresseur (3) à la roue de turbine (4),
dans lequel le procédé comprend une étape d'introduction d'air sous pression depuis le compresseur (1) dans un interstice (10) entre le carénage de turbine (5) et les aubes (6) de la roue de turbine (4), **caractérisé en ce que** de l'air sous pression est introduit dans l'interstice (10) par l'intermédiaire de l'arbre (7) du turbocompresseur et par l'intermédiaire des aubes (6) de la roue de turbine (4).

9. Procédé selon la revendication 8, dans lequel l'ensemble de l'air sous pression est introduit dans l'interstice (10) par l'intermédiaire des aubes (6) de la roue de turbine (4).

10. Procédé selon la revendication 8, dans lequel de l'air sous pression est introduit dans l'interstice (10) par l'intermédiaire du carénage de turbine (5).
